# EUROPÄISCHE PATENTANMELDUNG

(11) **EP 3 499 691 A1**
(43) Veröffentlichungstag der Anmeldung: **19.06.2019**
(21) Anmeldenummer: 18210320.0
(22) Anmeldetag: 05.12.2018
(51) Int. Cl.: H02K 11/026, H02K 5/22

(54) **ELEKTROMOTOR MIT EINEM DURCHFÜHRUNGSKONDENSATOR**

(30) Priorität: 18.12.2017 DE 102017223065
(71) Anmelder: Bühler Motor GmbH, 90459 Nürnberg (DE)
(72) Erfinder: BERNREUTHER, Georg, 90449 Nürnberg (DE); SCHEER, Arnold, 04275 Leipzig (DE)

(57) **Zusammenfassung**

Die Erfindung betrifft einen Elektromotor (1), insbesondere Kommutatormotor, mit einem elektrisch leitfähigen Gehäuseteil (2), in welchem Gehäusedurchführungen (3) für eine isolierte Anschlussleitung (4) vorgesehen sind und einem Durchführungskondensator (5). Aufgabe der Erfindung ist es, durch eine modifizierte Gestaltung der Motorkontaktierung über die beiden Anschlussleitungen, die in das Motorinnere geführt werden, Durchführungskondensatoren zu erzeugen, ohne zusätzliche Bauelemente zu benötigen, wobei Kapazitäten im Bereich von 0,5 bis 2pF oder höher erreichbar sind. Eine weitere Aufgabe besteht darin eine besonders dichte Leitungsdurchführung sowohl für flüssige oder gasförmige Medien als auch für elektromagnetische Störungen zu erreichen. Diese Aufgabe wird erfindungsgemäß durch die Merkmale des Anspruchs 1 gelöst.

## Beschreibung

Die Erfindung betrifft einen Elektromotor (1), insbesondere Kommutatormotor, mit einem elektrisch leitfähigen Gehäuseteil (2) in welchem Gehäusedurchführungen (3) für eine isolierte Anschlussleitung (4) vorgesehen sind und einem Durchführungskondensator (5).

Kommutatormotoren bestehen in der Regel aus einem mit Permanentmagneten versehenen Stator und einem mit einer Wicklung versehenen Rotor oder Anker. Um einzelne Spulen der Wicklung mit elektrischer Energie zu versorgen werden häufig Kohlebürsten eingesetzt, welche an Lamellen eines Kommutators federnd anliegen. Durch einen in den Spulen fließenden Strom wird ein Rotormagnetfeld erzeugt, das mit dem Statormagnetfeld wechselwirkt und dadurch den Rotor antreibt. Die Drehung des Rotors und damit des Kommutators werden die Spulen der Wicklung nacheinander ein und ausgeschaltet.

Kommutatormotoren haben die Eigenschaft, dass sie breitbandige elektromagnetische Störungen aussenden. Diese Störungen können sowohl leitungsgebunden als auch als Strahlung auftreten. Verursacht werden die elektromagnetischen Störungen hauptsächlich durch eine Funkenbildung zwischen einem rotierenden Kommutator und den Kohlebürsten. Wegen der Relativbewegung zwischen Bürsten und Kommutator kommt es immer wieder zu galvanischen Kontaktabrissen. Da die Oberflächen der Laufflächen stets eine Rauigkeit aufweisen, kann die gegenseitige Berührung der Kontaktflächen nur partiell sein, sie beschränkt sich auf mikroskopisch kleine Berührungsflächen. Durch ständige Veränderungen infolge der Relativbewegungen ändern sich auch ständig die Berührungsflächen. Auch wenn sich zwei unterschiedlich geladene Lamellen kurzschließen, führt das zu elektrischen Überschlägen, die als Funken sichtbar werden. Wenn die Kommutatorlamellen aus dem Kontaktbereich der Kohle austreten, werden Kontaktabrissfunken erzeugt. In Summe führt die Funkenbildung zum sogenannten Bürstenfeuer. Da die Funken impulsartig auftreten, können die Frequenzanteile sehr unterschiedlich sein. Dies führt zu breitbandigen Störungen, die sich üblicherweise vom KHz bis GHz-Bereich erstrecken. Es sind daher grundsätzlich alle wirtschaftlich genutzten Frequenzbänder betroffen.

Um zu vermeiden, dass Kommutatormotoren als Störquellen andere elektrische Systeme stören oder sogar zum Ausfall bringen, dürfen die emittierten elektromagnetischen Wellen bestimmte Störschwellen nicht überschreiten.

Aus diesem Grund werden Kommutatormotoren häufig mit Entstörelementen ausgerüstet. In der einfachsten Ausführung werden Drosseln eingesetzt, die in der Nähe der Kohlebürsten angeordnet sind. Drosseln bilden Induktivitäten und haben die Aufgabe, hochfrequente Anteile im Motorstrom auszufiltern und nur den Gleichstromanteil durchzulassen.

Um hochfrequente Spannungsspitzen auszufiltern, werden zusätzlich auch Kondensatoren eingesetzt. Diese bilden Kapazitäten und werden zwischen den Motorzuleitungen verschaltet (X-Kondensatoren), oder zwischen den beiden Motorzuleitungen und der Motormasse, z.B. dem Motorgehäuse und den Lagerschilden (Y-Kondensatoren). Besonders hoch ist die Entstörwirkung, wenn X- und Y-Kondensatoren kombiniert werden.

Entstörelemente erhöhen den Bauteileaufwand der Motoren und machen die Herstellung unwirtschaftlich.

Besonders effektiv, aber aufwändig in Herstellung und Einbau sind sogenannte Durchführungskondensatoren. Durchführungskondensatoren sind koaxial aufgebaute Kondensatoren, die eine elektrische Leitung durch eine leitfähige Wandung (Abschirmung) führen. Eine Elektrode ist beidseitig als Draht an den Enden einer als Dielektrikum wirkenden Hülse herausgeführt. Diese ist von einer zweiten Hülse umgeben, die die zweite Elektrode bildet. Die beiden Elektroden sind durch eine Isolationsfläche getrennt, die als Dielektrikum wirkt. Die Kapazität ergibt sich im Wesentlichen aus der Isolationsfläche, dem Abstand zwischen den beiden Elektroden und dem Material des Dielektrikums. Die außen liegende Elektrode wird in die Gehäusewand eingelötet oder anderweitig kontaktiert. Die Kapazität zwischen den Anschlüssen und den Hülsen wirkt entstörend.

Durchführungskondensatoren bilden mit den Anschlussleitungen einen Tiefpass mit einer zentralen Kapazität gegen Erde. Hohe Frequenzen werden blockiert, niedrige Frequenzen und Gleichstrom werden durchgelassen. Mit ihrer induktivitätsarmen Montage bieten sie Schutz gegen Gleichtaktsignale bis zu sehr hohen Frequenzen.

Bei Elektromotoren mit hohen Dichtheitsanforderungen werden häufig Dichtmaterialien in einem Raumbereich zwischen der Anschlussleitung und dem umgebenden Gehäuse eingebaut. Dieser Bereich ist für elektromagnetische Wellen gewisser Frequenzen durchlässig.

Aufgabe der Erfindung ist es, durch eine modifizierte Gestaltung der Motorkontaktierung über die beiden Anschlussleitungen, die in das Motorinnere geführt werden, Durchführungskondensatoren zu erzeugen, ohne zusätzliche Bauelemente zu benötigen, wobei Kapazitäten im Bereich von 0,5 bis 2pF oder höher erreichbar sind. Eine weitere Aufgabe besteht darin eine besonders dichte Leitungsdurchführung sowohl für flüssige oder gasförmige Medien als auch für elektromagnetische Störungen zu erreichen.

Diese Aufgabe wird erfindungsgemäß durch die Merkmale des Anspruchs 1 gelöst. Der Durchführungskondensator (5) besteht aus einem mit der Anschlussleitung (4) elektrisch verbundenen Steckkontakt (6), einem Schrumpfschlauch (7) als Dielektrikum und das Gehäuseteil (2) im Bereich einer Gehäusedurchführung (3). Diese Bauteile werden in der Regel ohnehin bei der Herstellung einer Anschlussleitung eingesetzt, so dass kein zusätzlicher Aufwand, insbesondere keine Erhöhung der Teileanzahl nötig wird.

Weiterbildungen der Erfindung werden in den Unteransprüchen dargestellt. Hohe Dichtheitsanforderungen werden dadurch erfüllt, dass zwischen dem Gehäuseteil (2) im Bereich der Gehäusedurchführung (3) und der Anschlussleitung (4) eine Dichtung (8) vorgesehen ist.

Zweckmäßigerweise ist vorgesehen dass die Dichtung (8) in Form einer Dichtungstülle ausgeführt ist. Dichtungstüllen sind gummiartige Formteile, die frei formbar sind und dadurch auch zusätzliche Eigenschaften erhalten können.

Es ist vorgesehen, dass die Dichtung in Form einer Einzeladerabdichtung ausgeführt ist. Hierdurch ist eine einzelne durch Kupferlitzen gebildete Leitung vorhanden, die aus geometrischen Gründen einen konzentrischen Aufbau eines Durchführungskondensators erleichtert.

Der ohnehin vorhandene Steckkontakt (6) ist vorzugsweise mit einem Isolierungscrimp (10) einstückig, welcher um die Dichtung (8), die Dichtungstülle und/oder der Einzeladerabdichtung herum angeordnet ist. Hierfür kann die Dichtungstülle mit einer entsprechenden Verbindungsgeometrie ausgebildet sein, durch welche auch ein Formschluss zwischen der Dichtungstülle und dem Isolierungscrimp herstellbar ist.

Eine weitere Crimpverbindung, hier als Leitungscrimp (11) bezeichnet, ist um einen abisolierten Bereich der Anschlussleitung (4) angeordnet. Dieser Leitungscrimp ist ebenso wie der Isolierungscrimp mit dem Steckkontakt (6) einstückig. Es bedeutet keinen nennenswerten Mehraufwand einen Steckkontakt auf diese Weise auszuführen.

Darüber hinaus ist vorgesehen, dass der Schrumpfschlauch (7) zwischen dem Isolierungscrimp (10) und der Gehäusedurchführung (3) des Gehäuseteils (2) angeordnet ist. Dadurch bildet der Schrumpfschlauch das Dielektrikum eines Durchführungskondensators.

In Einsatzfällen mit noch höheren Anforderungen an die Entstörwirkung lässt sich auf einfache Weise eine Erhöhung der Kapazität erreichen, indem eine zusätzliche Metallhülse (9) um den Steckkontakt (6) zwischen dem Gehäuseteil (2) und dem Schrumpfschlauch (7) angeordnet ist. Besonders vorteilhaft ist es, wenn die Metallhülse (9) über das Gehäuseteil (2) in einen Innenraum des Elektromotors vorsteht. Dieser Metallring vergrößert die Kondensatorfläche und damit seine Kapazität.

In der Regel sind bei Gleichstrom-Kommutatormotoren zwei Anschlussleitungen vorhanden, deshalb sollten beide Leitungen separat über Gehäusedurchführungen (3) durch das Gehäuse geführt werden, wobei jeweils eine Einzelader hindurchgeführt wird, welche jeweils von einem Steckkontakt und einem Schrumpfschlauch umgeben sind.

Zweckmäßigerweise sollte das Gehäuseteil aus einem besonders gut elektrisch leitenden Material ausgebildet sein, deshalb ist vorgesehen ein Metallmaterial, z. B. Aluminium oder Magnesium, zu verwenden.

Gemäß einer Weiterbildung der Erfindung ist ein Steckerbereich (12) in einem Motorinnenraum des Elektromotors angeordnet. Demgegenüber kann eine flexible elektrische Leitung aus dem Gehäuseteil (2) herausragen.

Weiter ist der Schrumpfschlauch (7) auf einer einem Motorinnenraum zugewandten Seite des Gehäuseteils (2) und die Dichtung (8) auf einer dem Motorinnenraum abgewandten Seite des Gehäuseteils (2) angeordnet. Auf diese Weise ist der Durchführungskondensator auch gegen Feuchtigkeit gut abgedichtet.

Ausführungsbeispiele der Erfindung werden nachfolgend anhand der Zeichnung näher erläutert. Es zeigen:
Fig. 1 einen Elektromotor mit zwei Anschlussleitungen,
Fig. 2 eine Stirnansicht des Elektromotors,
Fig. 3 einen Durchführungskondensator,
Fig. 4 eine Schnittansicht durch einen monierten Durchführungskondensator,
Fig. 5 einen ergänzten Durchführungskondensator,
Fig. 6 ein erstes Beispiel einer Entstörschaltung,
Fig. 7 ein zweites Beispiel einer Entstörschaltung und
Fig. 8 ein drittes Beispiel einer Entstörschaltung.

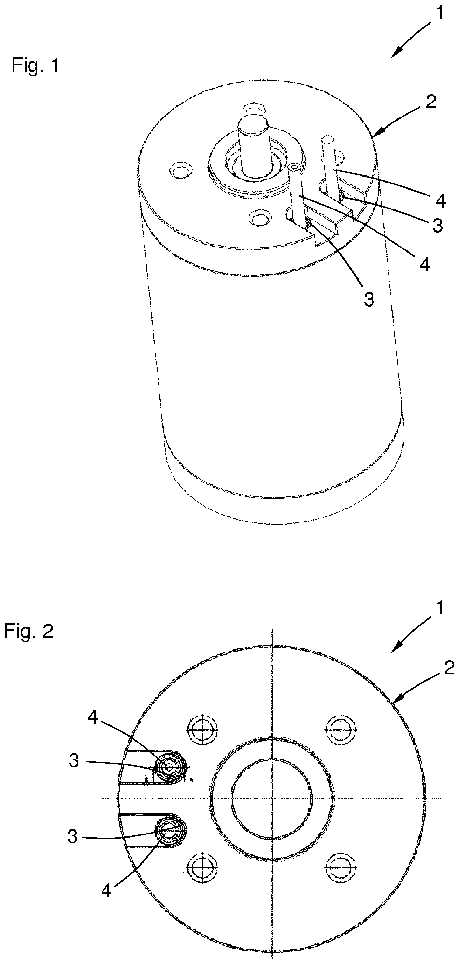

Fig. 1 zeigt eine räumliche Darstellung eines Elektromotors 1, mit einem elektrisch leitenden Gehäuseteil 2, welches Gehäusedurchführungen 3 aufweist, durch welche Anschlussleitungen 4 geführt sind. Das Gehäuseteil 2 ist hier ein Lagerschild.

Fig. 2 zeigt eine Stirnansicht des Elektromotors 1, mit dem Gehäuseteil 2 den Gehäusedurchführungen 3 und den Anschlussleitungen 4.

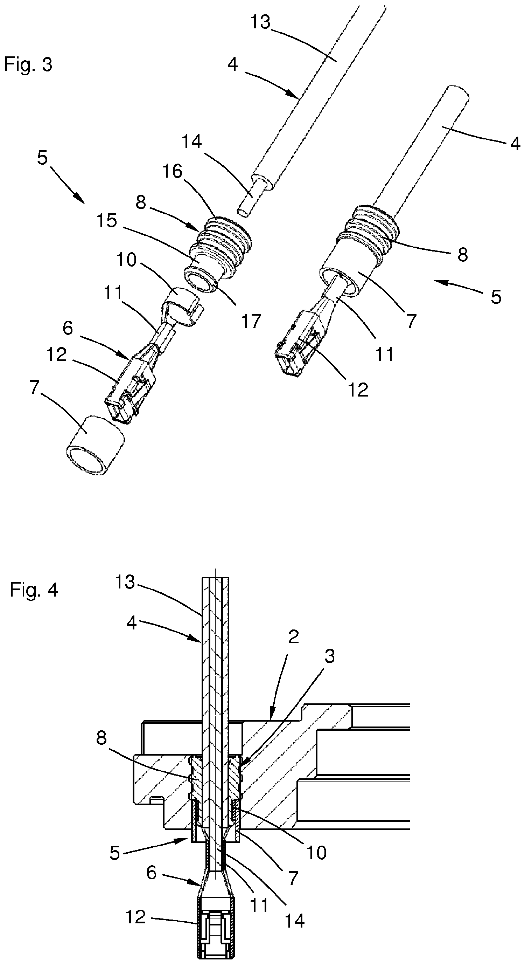

Fig. 3 zeigt einerseits eine Explosionsdarstellung eines Durchführungskondensators 5, mit einer Anschlussleitung 4, einer Dichtung 8 in Form einer Tülle, einen Steckkontakt 6 und einen Schrumpfschlauch 7. Der Anschlussstecker weist einen Steckerbereich 12, einen Leitungscrimp 11 und einen Isolierungscrimp 10 auf. Die Dichtung besteht aus einem Dichtungsbereich mit voneinander beabstandeten vorspringenden Ringen 16 und einer Crimpaufnahme 15, an dessen Ende ein Rückhaltering 17 vorspringt, welcher einen Formschluss mit dem Isolierungscrimp erlaubt. Die Anschlussleitung 4 besteht aus einem Leitungsdraht 14 in Form von Kupferlitzen (nicht aufgelöst) und einer Leitungsisolierung 13. Im Übrigen ist auch ein montierter Durchführungskondensator 5 dargestellt, bei welchen die Dichtung 8 über die Anschlussleitung 4 geschoben ist. Über der Crimpaufnahme und dem Isolierungscrimp (hier verdeckt) ist der Schrumpfschlauch angeordnet.

Fig. 4 zeigt eine Schnittdarstellung des Durchführungskondensators 5 im Gehäuseteil 2 (hier Lagerschild). Hier ist deutlicher als in Fig. 3 die räumliche Zuordnung der Einzelteile im eingebauten Zustand zu erkennen. Es sind dargestellt von innen nach außen, die Anschlussleitung 4, mit Leitungsdraht 14 und Leitungsisolierung 13, die Dichtung 8, der Steckkontakt 6, mit dem Steckerbereich 12, dem Leitungscrimp 11 und dem Isolierungscrimp 10, dem Schrumpfschlauch 7, der Gehäusedurchführung 3 und dem Gehäuseteil 2.

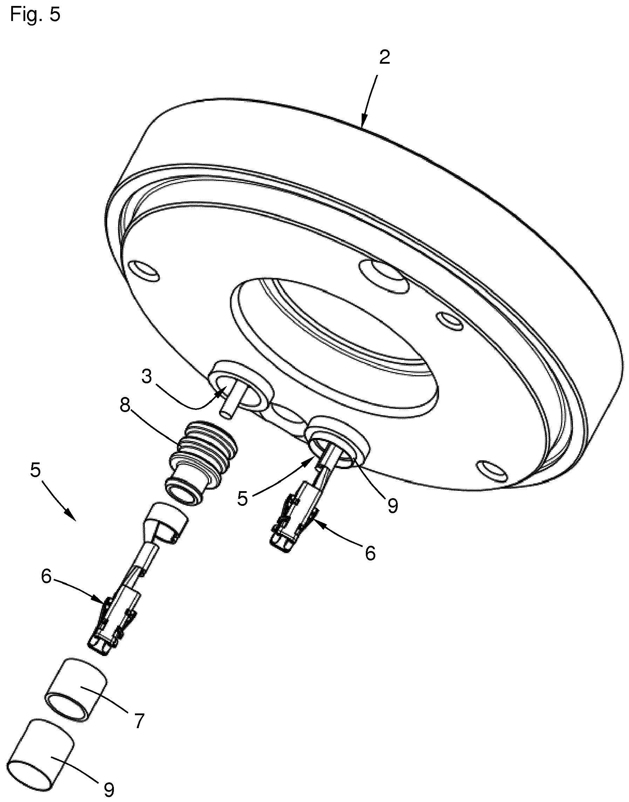

Fig. 5 zeigt eine Explosionsdarstellung des Durchführungskondensators 5, mit dem Gehäuseteil 2, der Gehäusedurchführung 3, der Dichtung 8, dem Steckkontakt 6, dem Schrumpfschlauch 7 und einer Metallhülse 9, die zur Vergrößerung der Kondensatorfläche dient. Weiter ist ein Durchführungskondensator 5 mit der Metallhülse 9 und dem Steckkontakt 6 im eingebauten Zustand dargestellt.

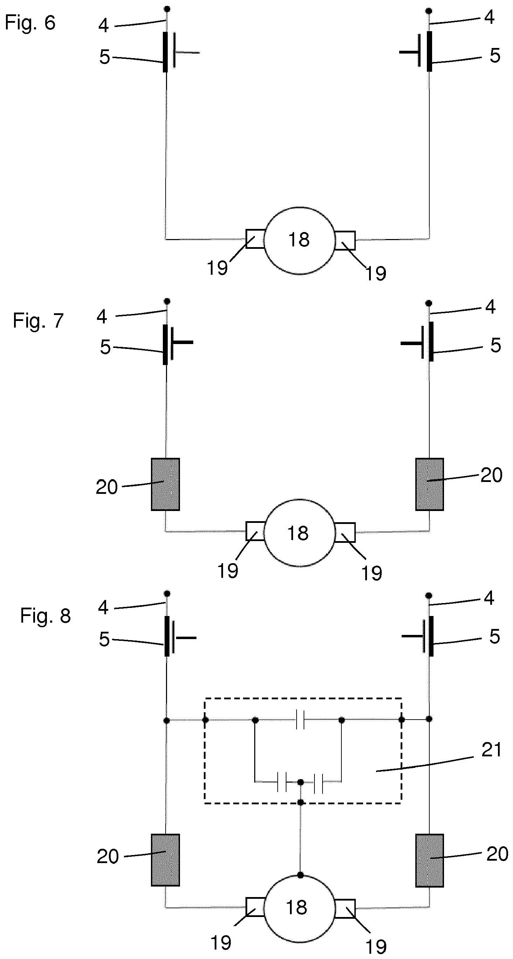

Fig. 6 zeigt ein erstes Beispiel für eine Entstörschaltung, mit einem Kommutator 18, Bürsten 19, Anschlussleitungen 4 und Durchführungskondensatoren 5.

Fig. 7 zeigt ein zweites Beispiel für eine Entstörschaltung, mit einem Kommutator, 18, Brüsten 19, Anschlussleitungen 4, Durchführungskondensatoren 5 und zusätzlich Drosseln 20.

Fig. 8 zeigt ein drittes Beispiel für eine Entstörschaltung, mit einem Kommutator 18, Bürsten 19, Anschlussleitungen 4, Durchführungskondensatoren 5, Drosseln 20 und zusätzlich einer Kondensatorschaltung 21, bestehend aus drei Kondensatoren.

### Bezugszeichenliste

- 1: Elektromotor
- 2: Gehäuseteil
- 3: Gehäusedurchführung
- 4: Anschlussleitung
- 5: Durchführungskondensator
- 6: Steckkontakt
- 7: Schrumpfschlauch
- 8: Dichtung
- 9: Metallhülse
- 10: Isolierungscrimp
- 11: Leitungscrimp
- 12: Steckerbereich
- 13: Leitungsisolierung
- 14: Leitungsdraht
- 15: Crimpaufnahme
- 16: vorspringende Ringe
- 17: Rückhaltering
- 18: Kommutator
- 19: Bürste
- 20: Drossel
- 21: Kondensatorschaltung

## Patentansprüche

1. Elektromotor (1), insbesondere Kommutatormotor, mit einem elektrisch leitfähigen Gehäuseteil (2), in welchem Gehäusedurchführungen (3) für eine isolierte Anschlussleitung (4) vorgesehen sind und einem Durchführungskondensator (5), **dadurch gekennzeichnet, dass** der Durchführungskondensator (5) aus einem mit der Anschlussleitung (4) elektrisch verbundenen Steckkontakt (6), einem Schrumpfschlauch (7) oder einer hülsenförmigen Anformung einer Bürstenbrücke als Dielektrikum und dem Gehäuseteil (2) im Bereich einer Gehäusedurchführung (3) gebildet ist.

2. Elektromotor nach Anspruch 1, **dadurch gekennzeichnet, dass** zwischen dem Gehäuseteil (2) im Bereich der Gehäusedurchführung (3) und der Anschlussleitung (4) eine Dichtung (8) vorgesehen ist.

3. Elektromotor nach Anspruch 2, **dadurch gekennzeichnet, dass** die Dichtung (8) in Form einer Dichtungstülle ausgeführt ist.

4. Elektromotor nach Anspruch 2 oder 3, **dadurch gekennzeichnet, dass** die Dichtung in Form einer Einzeladerabdichtung ausgeführt ist.

5. Elektromotor nach Anspruch 1, 2, 3 oder 4, **dadurch gekennzeichnet, dass** der Steckkontakt (6) mit einem Isolierungscrimp (10) einstückig ist, welcher um die Dichtung (8), die Dichtungstülle und/oder der Einzeladerabdichtung herum angeordnet ist.

6. Elektromotor nach Anspruch 1, 2, 3, 4 oder 5, **dadurch gekennzeichnet, dass** der Steckkontakt (6) mit einem Leitungscrimp (11) einstückig ist, welcher um einen abisolierten Bereich der Anschlussleitung (4) herum angeordnet ist.

7. Elektromotor nach Anspruch 1, 2, 3, 4, 5 oder 6, **dadurch gekennzeichnet, dass** der Schrumpfschlauch (7) zwischen dem Isolierungscrimp (10) und der Gehäusedurchführung (3) des Gehäuseteils (2) angeordnet ist.

8. Elektromotor nach zumindest einem der vorangehenden Ansprüche, **dadurch gekennzeichnet, dass** eine zusätzliche Metallhülse (9) um den Steckkontakt (6) zwischen dem Gehäuseteil (2) und dem Schrumpfschlauch (7) angeordnet ist.

9. Elektromotor nach Anspruch 8, **dadurch gekennzeichnet, dass** die Metallhülse (9) über das Gehäuseteil in einen Innenraum des Elektromotors vorsteht.

10. Elektromotor nach zumindest einem der vorangehenden Ansprüche, **dadurch gekennzeichnet, dass** der Elektromotor zwei Gehäusedurchführungen (3) aufweist, in welchem jeweils eine Einzelader hindurchgeführt wird, welche jeweils von einem Steckkontakt und einem Schrumpfschlauch umgeben sind.

11. Elektromotor nach zumindest einem der vorangehenden Ansprüche, **dadurch gekennzeichnet, dass** das Gehäuseteil (2) aus einem elektrisch leitenden Metallmaterial, z. B. Aluminium oder Magnesium, besteht.

12. Elektromotor nach zumindest einem der vorangehenden Ansprüche, **dadurch gekennzeichnet, dass** ein Steckerbereich (12) in einem Motorinnenraum des Elektromotors angeordnet ist.

13. Elektromotor nach zumindest einem der Ansprüche 2 bis 12, **dadurch gekennzeichnet, dass** der Schrumpfschlauch (7) auf einer einem Motorinnenraum zugewandten Seite des Gehäuseteils (2) und die Dichtung (8) auf einer dem Motorinnenraum abgewandten Seite des Gehäuseteils (2) angeordnet ist.
